# EUROPEAN PATENT SPECIFICATION

(11) **EP 4 145 096 B1**
(45) Date of publication and mention of the grant of the patent: **28.05.2025**
(21) Application number: 22193856.6
(22) Date of filing: 05.09.2022
(51) Int. Cl.: G01G 19/03

(54) **WEIGHING DEVICE**
WIEGEVORRICHTUNG
DISPOSITIF DE PESEE

(30) Priority: 07.09.2021 JP 2021145746; 31.08.2022 JP 2022138498
(43) Date of publication of application: 08.03.2023
(73) Proprietor: Ishida Co., Ltd., Kyoto 606-8392 (JP)
(72) Inventor: TARUMOTO, Yoshinori, Ritto-shi, Shiga, 520-3026 (JP); SUDA, Shoji, Ritto-shi, Shiga, 520-3026 (JP)
(74) Representative: Global IP Europe Patentanwaltskanzlei

(56) References cited:
- EP-A1- 3 121 570
- EP-A1- 3 882 582
- JP-B2- 6 177 512

## Description

### Technical Field

The present invention relates to a weighing apparatus.

### Background Art

Weighing apparatus are known which convey an article and measure the weight of the article as it is being conveyed. In such weighing apparatus, for example, noise produced by shock when the article is handed over to a conveyance unit can be included in the weigh signal of a detection unit. To reduce the adverse effect that the noise has on the weighing, weighing apparatus sometimes use a filter to reduce the noise included in the weigh signal.

The frequency of the noise included in the weigh signal may vary depending on the properties of the article that is weighed and the conveyance conditions of the article. For that reason, if the weighing apparatus always uses a filter having the same characteristics, this runs the risk of not being able to sufficiently reduce the noise included in the weigh signal, resulting in a drop in the weighing accuracy of the weighing apparatus. To address this problem, for example patent document 1 (JP-A No. 2012-199692) discloses a technology that enables the filter characteristics to be changed.

EP 3 121 570 A1 discloses a weighing device having a weighing unit for weighing an article and for outputting an original signal, a filter unit for performing a filtering process, a control unit for making a waveform of a weighing signal and a storage unit for storing the original signal and the weighing signal.

JP 6177512 B discloses a weighing device having a speed setting unit for setting a conveyor speed, a filter setting unit for setting a filter based on the conveyor speed and a conveyor distance, and an acquiring unit for acquiring a weight of an apparatus from the filtered signal.

EP 3 882 582 A1 discloses a weighing apparatus having a conveyance unit for conveying an article, a weighing unit for weighing the article, and a processing unit with a plurality of digital filters set in advance and for processing an original signal from the weighing unit.

### SUMMARY OF THE INVENTION

### Technical Problem

However, when using the kind of filter disclosed in patent document 1 (JP-A No. 2012-199692), it becomes necessary to actually conduct a test operation of the weighing apparatus to set the filter to use. Furthermore, when using the kind of filter disclosed in patent document 1 (JP-A No. 2012-199692), a filter setting with which a high weighing accuracy can be realized is not easy to achieve unless one is a knowledgeable and experienced technician.

It is an object of the present invention to provide a weighing apparatus that weighs an article as it is being conveyed and with which it is possible to achieve an appropriate filter setting even if one is not a knowledgeable and experienced technician.

### Solution to Problem

A weighing apparatus of a first aspect includes a conveyance unit, a detection unit, an acquisition unit, and a control unit. The conveyance unit is configured to receive and convey an article. The detection unit is configured to detect the weight of the conveyance unit or, in a case where the conveyance unit is conveying the article, the weight of the conveyance unit and a weight of the article on the conveyance unit and output a weigh signal. The acquisition unit is configured to acquire i) a prescribed weight of the article conveyed by the conveyance unit, ii) a speed at which the article is conveyed by the conveyance unit and iii) a length of the article in the direction in which it is conveyed by the conveyance unit. The control unit is configured to determine, based on the prescribed weight of the article, the speed at which the article is conveyed by the conveyance unit and the length of the article in the direction in which it is conveyed by the conveyance unit that the acquisition unit has acquired, a filter setting to use to filter the weigh signal detected by the detection unit.

The weighing apparatus of the first aspect determines the filter setting to use to filter the weigh signal based on the prescribed weight of the article, the conveyance speed of the article and the length of the article in the conveyance direction that it has acquired. For that reason, in the weighing apparatus of the first aspect, it is possible to determine an appropriate filter setting with which a high weighing accuracy can be realized even if one is not a knowledgeable and experienced technician.

According to a preferred embodiment of the weighing apparatus mentioned above, the weighing apparatus further includes a storage unit. The storage unit is configured to store information in which the prescribed weight of the article or the conveyance speed of the article, the length of the article, and the filter setting are associated with each other. The control unit is configured to determine the filter setting further based on the information stored in the storage unit.

In the weighing apparatus of this embodiment, the prescribed weight of the article or the conveyance speed of the article, the length of the article, and the appropriate filter setting are associated with each other and stored in the storage unit. Therefore, the appropriate filter setting can be determined even without conducting an actual operation of the weighing apparatus.

According to another preferred embodiment of any one of the weighing apparatuses mentioned above, the acquisition unit is further configured to acquire information relating to a vibrational characteristic of a constituent part of the weighing apparatus. The control unit is configured to determine the filter setting further based also on the information relating to the vibrational characteristic of the constituent part of the weighing apparatus that the acquisition unit has acquired.

In the weighing apparatus of this embodiment, it is possible to determine an appropriate filter setting with which a high weighing accuracy can be realized even if the vibrational characteristic of the weighing apparatus change due, for example, to replacement of a part. Furthermore, in the weighing apparatus of the third aspect, the control unit can be shared among plural weighing apparatus whose configurations have different physical structures.

According to another preferred embodiment of any one of the weighing apparatuses mentioned above, the information relating to the vibrational characteristic of the constituent part of the weighing apparatus includes at least one of information about a length of the conveyance unit in the conveyance direction and information about a length of the conveyance unit in a direction orthogonal to the conveyance direction.

In the weighing apparatus of the fourth aspect, it is possible to determine an appropriate filter setting with which a high weighing accuracy can be realized even in a case where the vibrational characteristics change due to a difference in the length of the conveyance unit.

### Advantageous Effects of Invention

The weighing apparatus of the present invention determines the filter setting to use to filter the weigh signal based on the prescribed weight of the article or the conveyance speed of the article and the length of the article in the conveyance direction that it has acquired. Therefore, it is possible to determine an appropriate filter setting with which a high weighing accuracy can be realized even if one is not a knowledgeable and experienced technician.

### BRIEF DESCRIPTION OF THE DRAWINGS

FIG. 1 is a schematic front elevation view of a weighing apparatus pertaining to an embodiment of the weighing apparatus of the invention seen in a front elevation;
FIG. 2 is a block diagram of the weighing apparatus of FIG. 1;
FIG. 3 is a schematic plan view of main parts of the weighing apparatus of FIG. 1 seen from above;
FIG. 4 is a schematic configuration diagram of a second conveyor of a conveyance device and a detection device of the weighing apparatus of FIG. 1;
FIG. 5 is a block diagram of a configuration of a control device for a weight calculation process in the weighing apparatus of FIG. 1;
FIG. 6 is a diagram schematically showing a detection signal of a load cell of the weighing apparatus of FIG. 1 and the detection signal after being filtered; and
FIG. 7 is a diagram schematically showing the generation of a combination filter used in the weighing apparatus of FIG. 1.

### DESCRIPTION OF EMBODIMENTS

A weighing apparatus 100 pertaining to an embodiment of the weighing apparatus of the invention will be described with reference to the drawings. It will be noted that the embodiment of the weighing apparatus 100 described below is merely an example and that many changes in form and detail may be made without departing from the spirit and scope of the disclosure as defined in the claims.

### (1) Overall Configuration

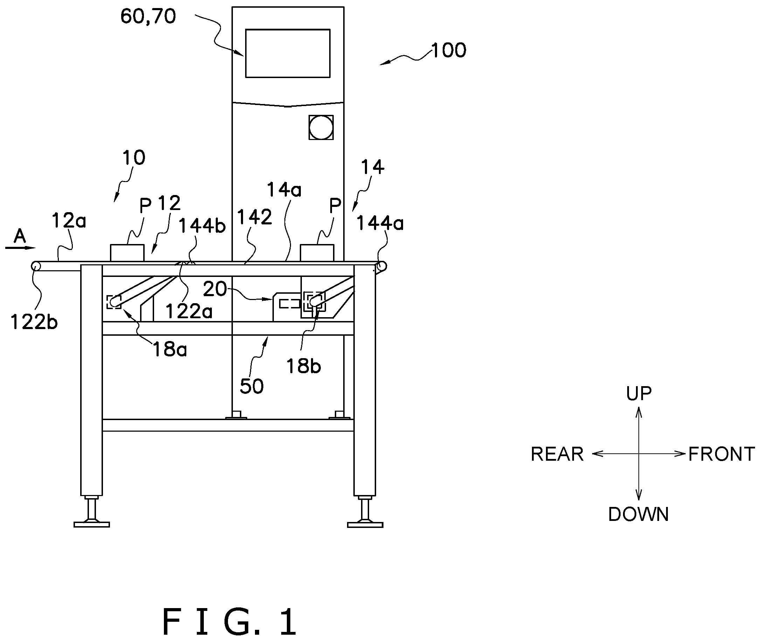

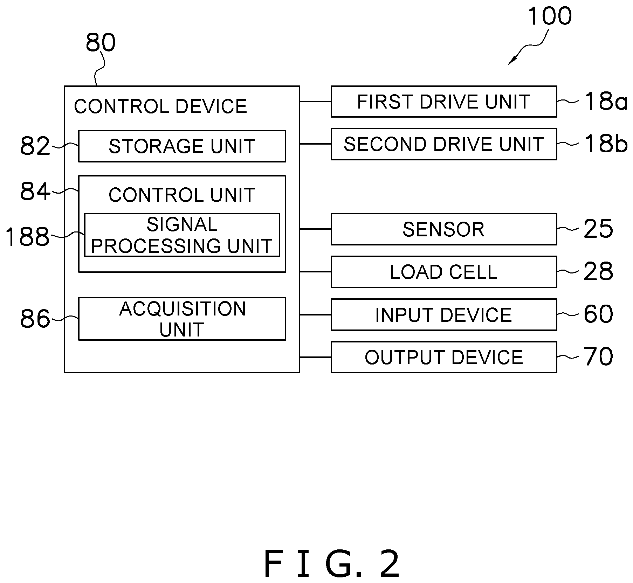

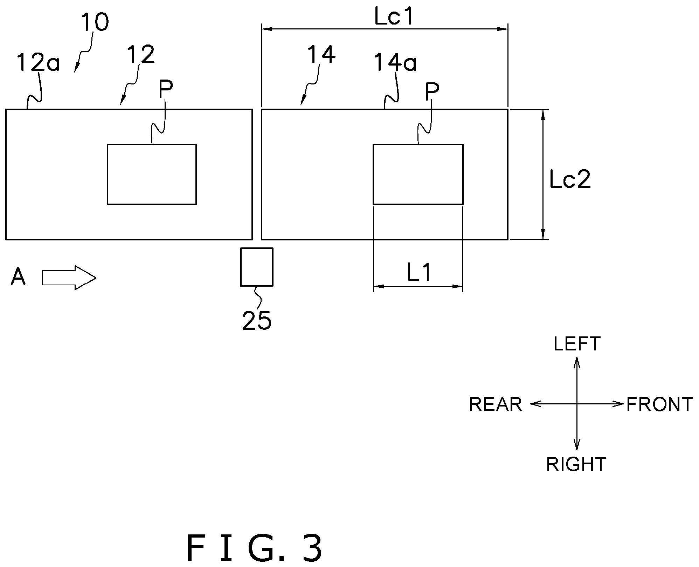

The overall configuration of the weighing apparatus 100 will be described with reference to FIG. 1 to FIG. 3. FIG. 1 is a schematic front elevation view of the weighing apparatus 100 seen in a front elevation. FIG. 2 is a block diagram of the weighing apparatus 100. FIG. 3 is a schematic plan view of main parts of the weighing apparatus 100 seen from above.

The weighing apparatus 100 is a weighing apparatus that weighs an article P while conveying the article P.

As shown in FIG. 1, the weighing apparatus 100 mainly has a conveyance device 10 and a detection device 20. As shown in FIG. 2, the weighing apparatus 100 also has a control device 80 that controls the operations of the conveyance device 10 and the detection device 20.

The conveyance device 10 receives and conveys the article P, which is supplied from an upstream process not shown in the drawings (e.g., a process to manufacture the article P). Specifically, the conveyance device 10 conveys the article P to a place where its weight is detected by the detection device 20.

The detection device 20 detects the weight of the article P conveyed by the conveyance device 10 and outputs a weigh signal corresponding to the weight it has detected to the control device 80. The control device 80 calculates a weight W of the article P based on the weigh signal that the detection device 20 output when it detected the weight of the article P. The control device 80 also determines whether or not the weight W of the article P it has calculated is within an allowable weight range. What is meant by the weight W of the article P being within an allowable weight range is the weight of the article P is equal to or greater than an allowable minimum weight and equal to or less than an allowable maximum weight.

It will be noted that downstream of the weighing apparatus 100, for example a sorting device not shown in the drawings is disposed. The sorting device sorts the article P based on the weight W of the article P calculated by the control device 80. For example, in a case where the weight W of the article P is outside the allowable weight range, the sorting device removes the article P from the conveyance line of the article P.

### (2) Detailed Configuration

The weighing apparatus 100 will be described in greater detail below.

It will be noted that in the following description expressions such as "front", "rear", "upper", "lower", "right", and "left" may be used when describing directions and positional relationships, but these expressions are used for convenience of description and should not be construed as limiting the content of the invention. Expressions such as "front", "rear", "upper", "lower", "right", and "left" follow the directions indicated by the arrows in the drawings unless otherwise specified.

### (2-1) Conveyance Device

The conveyance device 10 conveys the article P along a conveyance direction A (see FIG. 1 and FIG. 3).

The conveyance device 10 includes a first conveyor 12 and a second conveyor 14 as well as a first drive unit 18a and a second drive unit 18b. The first drive unit 18a and the second drive unit 18b are, for example, motors.

In the conveyance device 10, as shown in FIG. 1 and FIG. 3, the first conveyor 12 and the second conveyor 14 are arranged sequentially from upstream in the conveyance direction A of the article P.

As shown in FIG. 3, among the first conveyor 12 and the second conveyor 14, the first conveyor 12 is disposed upstream in the conveyance direction A. The first conveyor 12 functions as an intake conveyor that introduces to the weighing apparatus 100 the article P conveyed from the process upstream of the weighing apparatus 100. The first conveyor 12 conveys the article P in the conveyance direction A and hands over the article P to the second conveyor 14.

The first conveyor 12 includes a first conveyor belt 12a (see FIG. 1). The first conveyor belt 12a is entrained about a drive roller 122a and a follower roller 122b, and the first conveyor 12 conveys the article P on the first conveyor belt 12a in the conveyance direction A as a result of the first drive unit 18a driving the drive roller 122a.

As shown in FIG. 3, among the first conveyor 12 and the second conveyor 14, the second conveyor 14 is disposed downstream in the conveyance direction A. The second conveyor 14 receives the article P conveyed by the first conveyor 12 and conveys it. The detection device 20 detects the weight of the article P as it is being conveyed by the second conveyor 14 and outputs the weigh signal. The second conveyor 14 conveys the article P in the conveyance direction A and hands over the article P to a process downstream of the weighing apparatus 100 (e.g., the sorting device not shown in the drawings).

The second conveyor 14 includes a second conveyor belt 14a (see FIG. 1). The second conveyor belt 14a is entrained about rollers 144a and 144b, and the second conveyor 14 conveys the article P on the second conveyor belt 14a in the conveyance direction A as a result of the second drive unit 18b driving the roller (drive roller) 144a.

### (2-2) Detection Device

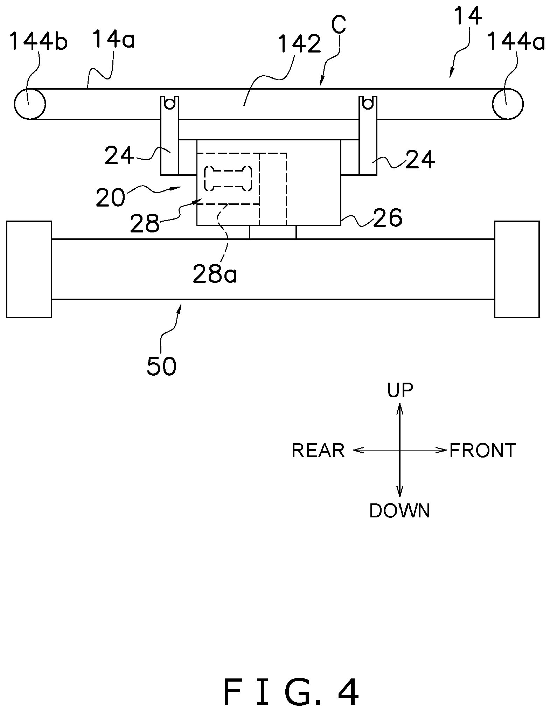

The detection device 20 will be described with further reference to FIG. 4. FIG. 4 is a schematic configuration diagram of the second conveyor 14 of the conveyance device 10 and the detection device 20.

As shown in FIG. 3 and FIG. 4, the detection device 20 mainly has a sensor 25 and a load cell 28 serving as an example of a detection unit (a weight sensor).

The sensor 25 detects that the article P conveyed by the first conveyor 12 has reached the second conveyor 14. The sensor 25 is, for example, a photoelectric sensor. However, the type of the sensor 25 is not limited to a photoelectric sensor and may be any type as long as it is a sensor that can detect the arrival of the article P to the second conveyor 14.

The control device 80 detects the timing when the entire article P is on the second conveyor belt 14a based on the detection result of the sensor 25, a conveyance speed V of the conveyance device 10, and a length L1 of the article P in the conveyance direction A. The control device 80 calculates the weight W of the article P based on the weigh signal output by the load cell 28 while the entire article P is on the second conveyor belt 14a.

The load cell 28 includes a strain element 28a that becomes deformed in proportion to force acting thereon and a strain gauge (not shown in the drawings) that is adhered to the strain element 28a, converts strain into an electrical signal (this signal is called a weigh signal), and outputs the electrical signal. In short, the load cell 28 sends a weigh signal corresponding to the force acting thereon. The load cell 28 is housed inside a case 26 disposed under the second conveyor 14 (see FIG. 4).

The weight detection by the load cell 28 will be described. In describing the weight detection by the load cell 28, details about the structure of the second conveyor 14 of the conveyance device 10 will first be described.

The second conveyor 14 mainly has, in addition to the second conveyor belt 14a, a frame 142 as well as a drive roller 144a and a follower roller 144b (see FIG. 4).

The frame 142 of the second conveyor 14 is supported by brackets 24 that extend upward from the case 26. The case 26, as shown in FIG. 4, is secured to a frame 50 of the weighing apparatus 100.

The drive roller 144a and the follower roller 144b, as shown in FIG. 4, are provided on both ends of the frame 142. The drive roller 144a and the follower roller 144b are supported by the frame 142 so as to be freely rotatable. The second conveyor belt 14a is entrained about the drive roller 144a and the follower roller 144b. The second drive unit 18b drives the drive roller 144a, whereby the second conveyor belt 14a rotates and the second conveyor 14 conveys the article P on the second conveyor belt 14a in the conveyance direction A.

Because of the above structure, when the article P is not on the second conveyor belt 14a, the load cell 28 detects the weight of the second conveyor 14 (the force that the second conveyor 14 exerts on the load cell 28), which serves as a conveyance unit, and outputs the weigh signal. It will be noted that, here, the weight of the second conveyor 14 is generally the total weight of the frame 142, the drive roller 144a and the follower roller 144b, and the second conveyor belt 14a. Furthermore, when the second conveyor belt 14a is conveying the article P, the load cell 28 detects the weight of the second conveyor 14 and the weight of the article P on the second conveyor 14 and outputs the weigh signal.

### (2-3) Control Device

The control device 80 controls the operations of each part of the weighing apparatus 100. The control device 80 also performs a process to calculate the weight W of the article P based on the weigh signal sent by the detection device 20.

The control device 80 of this embodiment mainly includes a CPU, a memory comprising a ROM, a RAM, and/or an auxiliary storage device (e.g., flash memory), and various electronic circuits. The control device 80 controls the operations of each part of the weighing apparatus 100 and performs various processes as a result of the CPU reading and executing programs stored in the memory.

It will be noted that the configuration of the control device 80 described here is merely an example configuration of the control device 80, and the same functions as those of the control device 80 of this embodiment may be realized by hardware such as a logic circuit or may be realized by a combination of hardware and software. Furthermore, the control device 80 may be realized by one device or may be realized by plural devices.

The control device 80 is electrically connected to the first drive unit 18a and the second drive unit 18b of the conveyance device 10 and the sensor 25 and the load cell 28 of the detection device 20.

The control device 80 is also electrically connected to an input device 60 and an output device 70 (see FIG. 2). The input device 60 receives various types of commands input by an operator of the weighing apparatus 100 and various types of information input by the operator. For example, the input device 60 is a touch panel display. The commands and information input to the input device 60 are sent to the control device 80. The output device 70 is controlled by the control device 80 and outputs various types of information. For example, the output device 70 is a display that displays various types of information. In other words, in this embodiment, a touch panel display functions as the input device 60 and the output device 70.

It will be noted that the input device and the output device are not limited to the device exemplified here. For example, the input device may be a mobile device (not shown in the drawings) operated by the operator or the like of the weighing apparatus 100 or a device that receives commands and information sent from a central control unit (not shown in the drawings) higher than the weighing apparatus 100. Furthermore, the output device may, for example, be a mobile device (not shown in the drawings) retained by the operator or the like of the weighing apparatus 100 or a device that outputs (sends) various types of information to a central control unit (not shown in the drawings) higher than the weighing apparatus 100.

The memory of the control device 80 includes a storage unit 82 that stores various types of information. Examples of the information stored in the storage unit 82 will be described later.

The CPU of the control device 80 functions as a control unit 84 and an acquisition unit 86 by reading and executing programs stored in the memory.

### (2-3-1) Acquisition Unit

The acquisition unit 86 acquires various types of information input to the input device 60. The various types of information acquired by the acquisition unit 86 are stored in the storage unit 82.

The information acquired by the acquisition unit 86 includes, for example, a prescribed weight Wt of the article P conveyed by the conveyance device 10. The prescribed weight Wt is, in other words, the weight that the article P should normally have (the ideal weight that the article P should have in a case where the article P is an accepted article).

The information acquired by the acquisition unit 86 also includes the length L1 of the article P conveyed by the second conveyor 14. Here, the length L1 of the article P conveyed by the second conveyor 14 is the length of the article P in the conveyance direction A in a state in which the article P is conveyed by the second conveyor 14.

It will be noted that although here the prescribed weight Wt of the article P and the length L1 of the article P are each input to the input device 60, they are not limited to this.

For example, information about the prescribed weight Wt of the article P and the length L1 of the article P may be stored by type of the article P in the storage unit 82, and the acquisition unit 86 may acquire an identifier that identifies the type of the article P input to the input device 60. In this configuration, the acquisition unit 86 can acquire the prescribed weight Wt of the article P and the length L1 of the article P by referencing the storage unit 82.

The information acquired by the acquisition unit 86 also includes a speed V at which the article P is conveyed by the conveyance device 10. Although this is not intended to limit the acquisition method, here, the conveyance speed V of the article P is input to the input device 60. It will be noted that the acquisition unit 86 may acquire, as information about the speed V at which the article P is conveyed by the conveyance device 10, information with which the conveyance speed V of the article P can be identified (e.g., the rotational speed of the motor of the second drive unit 18b).

### (2-3-2) Control Unit

The control unit 84 controls the operations of the weighing apparatus 100 based on the commands input to the input device 60 and the information acquired by the acquisition unit 86, such as the prescribed weight Wt of the article P, the length L1 of the article P, and the speed V at which the article P is conveyed by the conveyance device 10.

For example, when an operation command is input to the input device 60, the control unit 84 controls the operations of the first drive unit 18a and the second drive unit 18b so that the speed at which the article P is conveyed by the first conveyor 12 and the second conveyor 14 becomes the conveyance speed V acquired by the acquisition unit 86.

Furthermore, for example, the control unit 84 calculates the weight W of a given article P based on the weigh signal output by the load cell 28 when that article P is being conveyed by the second conveyor 14. Specifically, the control unit 84 detects the timing when the entire article P is on the second conveyor belt 14a based on the detection result of the sensor 25, the conveyance speed V of the conveyance device 10, and the length L1 of the article P. The control unit 84 calculates the weight W of the article P based on the weigh signal output by the load cell 28 while the entire article P is on the second conveyor belt 14a. The calculation of the weight W of the article P by the control unit 84 will be described later.

Furthermore, for example, the control unit 84 determines whether the weight of the article P it has calculated is within the allowable weight range. For example, the control unit 84 determines whether the weight W of the article P it has calculated is a value between the allowable minimum weight (prescribed weight Wt of article - α) and the allowable maximum weight (prescribed weight Wt of article + β) (α and β are predetermined numerical values). The control unit 84 determines that the article P is an accepted article when the weight W of the article P it has calculated is within the allowable weight range and determines that the article P is a rejected article when the weight W of the article P it has calculated is outside the allowable weight range.

### (A) Process for Calculating Weight of Article

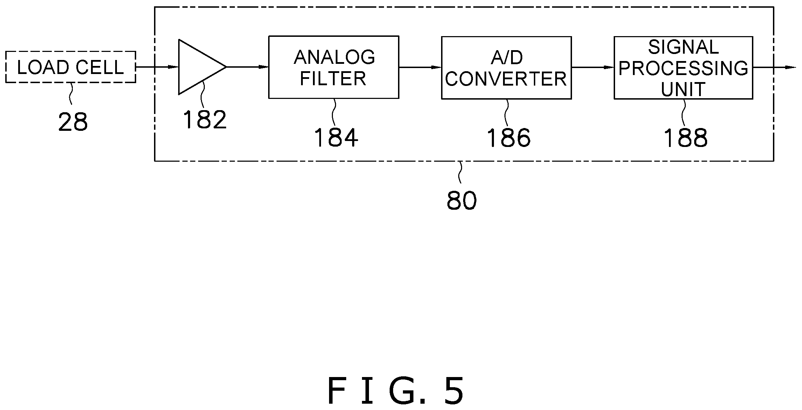

The process by which the control unit 84 calculates the weight W of the article P will be described. First, a configuration of the control device 80 for the weight calculation process will be described with reference to FIG. 5. FIG. 5 is a block diagram of a configuration of the control device 80 for the weight calculation process.

The control device 80 includes an amp 182, an analog filter 184, and an A/D converter 186. Furthermore, the control unit 84 includes a signal processing unit 188 as a functional unit for the process for calculating the weight of the article P.

The amp 182 amplifies the weigh signal input from the load cell 28 and outputs the amplified signal to the analog filter 184. The analog filter 184 removes unwanted high-frequency components from the amplified signal and outputs an analog signal. The A/D converter 186 converts the analog signal output from the analog filter 184 to a digital signal and outputs the digital signal to the signal processing unit 188. The signal processing unit 188 filters the digital signal using a predetermined finite impulse response (FIR) filter (hereinafter simply called a filter). In short, the signal processing unit 188 uses the predetermined filter to filter the weigh signal that has been preprocessed by the amp 182, the analog filter 184, and the A/D converter 186 (hereinafter the weigh signal after being preprocessed will be called the weigh signal of the load cell 28). The control unit 84 calculates the weight W of the article P based on the weigh signal of the load cell 28 filtered by the signal processing unit 188.

It will be noted that, as mentioned above, in a case where the second conveyor belt 14a is conveying the article P, the load cell 28 detects the weight of the second conveyor 14 and the weight of the article P on the second conveyor 14 and outputs the weigh signal. For that reason, if, in a case where the second conveyor belt 14a is conveying the article P, the control unit 84 were to calculate the weight as is based on the weigh signal from the load cell 28, the control unit 84 would calculate the total weight of the second conveyor 14 and the article P. Therefore, the control unit 84, before it actually starts measuring the weight of the article P, implements a process to derive a zero point based on the weigh signal output by the load cell 28 in a state in which the article P is not on the second conveyor belt 14a. In other words, the control unit 84, before it actually starts measuring the weight of the article P, implements in advance a process to calculate the weight of the second conveyor 14 that should be subtracted from the total weight of the second conveyor 14 and the article P on the second conveyor 14.

It will be noted that the reason the signal processing unit 188 filters the weigh signal of the load cell 28 is the weigh signal of the load cell 28 includes noise caused by the natural vibration of the weighing apparatus 100 and rotational vibration of the motors (e.g., the motor used as the second drive unit 18b) and the rollers (e.g., the drive roller 144a and the follower roller 144b of the second conveyor 14) being used by the weighing apparatus 100.

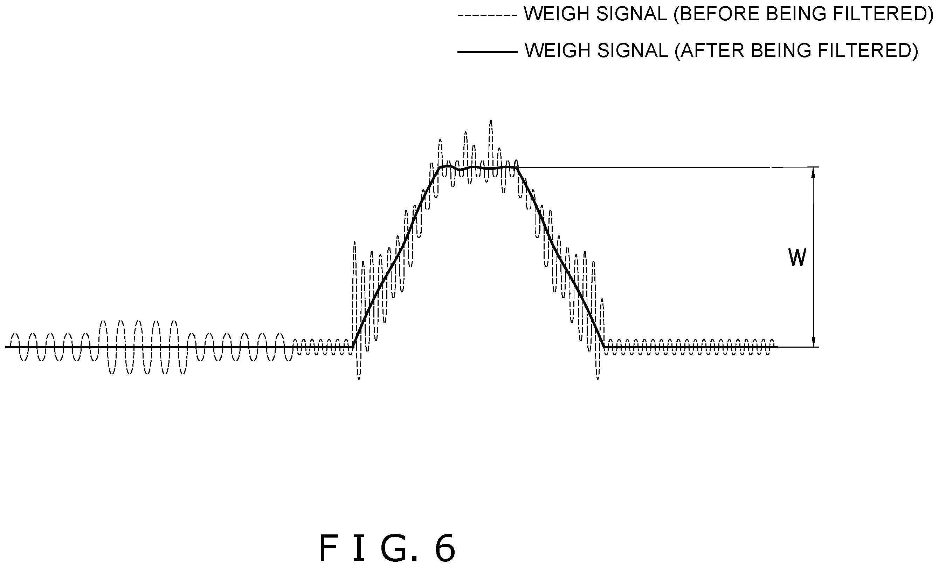

This will be described with reference to FIG. 6. The weigh signal of the load cell 28 is a signal that includes a vibration component (noise) with a relatively large amplitude as indicated by the dashed line in FIG. 6. The weight of the article P may not be accurately calculated from the weigh signal that includes this vibration component. Therefore, the signal processing unit 188 uses the predetermined filter to filter (reduce the noise in) the weigh signal of the load cell 28 to extract a signal with little noise (generally, a signal representing just the force the article P exerts on the load cell 28) such as indicated by the solid line in FIG. 6.

The control unit 84 calculates the weight W of the article P based on the value of the difference between the weigh signal after being filtered by the signal processing unit 188 and the zero point. Specifically, the control unit 84 calculates the weight W of the article P based on the value of the difference between the weigh signal in the period in which the entire article P is on the second conveyor belt 14a (the weigh signal in the plateau portion of the solid line in FIG. 6) and the weigh signal in the period in which the article P is not on the second conveyor belt 14a.

It will be noted that the frequency of the noise included in the weigh signal of the load cell 28 varies depending on various conditions.

For example, the frequency of the natural vibration of the weighing apparatus 100 is a relatively large frequency of about 20 to 100 Hz. The frequency of the natural vibration varies depending on, for example, a length Lc1 of the second conveyor 14 in the conveyance direction A of the conveyance device 10, a length Lc2 of the second conveyor 14 in the direction orthogonal to the conveyance direction A of the conveyance device 10 (see FIG. 3), the prescribed weight Wt of the article P, and the length L1 of the article P in the conveyance direction A.

Furthermore, the frequency of the rotational vibration of the motors and the rollers is a relatively small frequency of about 10 to 30 Hz. The frequency of the rotational vibration varies depending on, for example, the conveyance speed V of the article P (the speed of the second conveyor belt 14a), the length Lc1 of the second conveyor 14 in the conveyance direction A of the conveyance device 10, the length Lc2 of the second conveyor 14 in the direction orthogonal to the conveyance direction A of the conveyance device 10, the diameter of the drive roller 144a and the follower roller 144b, the number of teeth that the drive roller 144a has, the number of teeth that the motor used as the second drive unit 18b has, and the total length of the second conveyor belt 14a. For example, the frequency of the vibration of the rollers is calculated by the speed [m/s] of the second conveyor belt 14a / the roller diameter [m] × π. Furthermore, for example, the frequency of the vibration of the motors is calculated by the frequency of the vibration of the rollers × the number of teeth that the rollers have / the number of teeth that the motors have.

In this way, because the frequency of the noise included in the weigh signal of the load cell 28 is not always the same, the signal processing unit 188 is configured so that the filter setting it uses for the filtering can be varied. The reason that the filter setting that the signal processing unit 188 uses for the filtering can be varied is there is no single filter that can sufficiently reduce noise in all frequency bands among the filters used by the signal processing unit 188.

It will be noted that the filters settable by the signal processing unit 188 include a combination filter. Here, a combination filter is a filter created by combining plural filters serving as bases. The advantage of using a combination filter will be described.

When a combination filter is not used, the following problems may arise. For example, a given filter F1 is able to sufficiently (e.g., to 1/10,000 or less) reduce the amplitude of noise with a frequency equal to or greater than a given frequency H1 [hz], but its ability to reduce the amplitude of noise with a frequency smaller than the frequency H1 [hz] markedly drops. For that reason, when the frequency of the noise in the weigh signal of the load cell 28 includes a frequency equal to or less than the frequency H1 [hz], sufficient noise reduction cannot be expected even when the filter F1 is used. Meanwhile, another filter F2 is able to also reduce the amplitude of noise smaller than the frequency H1 [hz], but its ability to reduce the amplitude of noise is low compared with that of the base filter F1. For that reason, if the filter F2 is used, noise with a frequency smaller than the frequency H1 [hz] may also be able to be reduced, but at the same time the amplitude of noise equal to or greater than the frequency H1 [hz] may not be able to be sufficiently reduced.

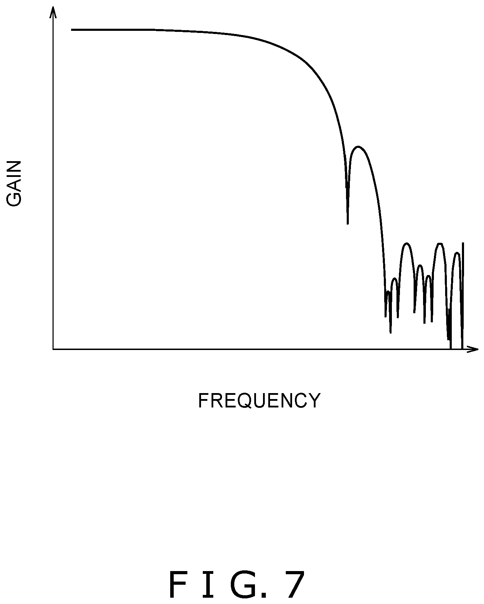

To address this, by creating a combination filter in which plural filters with different characteristics are combined such as schematically shown in FIG. 7 and using the combination filter to perform filtering, noise with a frequency equal to or greater than a given frequency can be sufficiently (e.g., to 1/10,000 or less) reduced, and also in regard to frequencies smaller than that frequency, it becomes possible to reduce to a relatively great extent the amplitude of a predetermined frequency.

To perform accurate weighing, it is important to determine which filter setting is to be used by the signal processing unit 188 from among numerous filter settings. However, usually, unless one is a skilled technician, it is difficult to select the appropriate filter setting from among the numerous filter settings to perform accurate weighing. Furthermore, in the case of actually operating the weighing apparatus 100 and determining the filter setting to be used by the signal processing unit 188, a long amount of time is required to determine the filter setting.

Therefore, in the weighing apparatus 100 that is an example of the weighing apparatus of the invention, the control unit 84 determines the filter setting to be used by the signal processing unit 188 as follows.

### (B) Process for Determining Filter Setting Performed by Control Unit

The frequency of the noise included in the weigh signal of the load cell 28, as mentioned above, varies depending on, for example, the properties of the article P (the prescribed weight Wt of the article P or the length L1 of the article P in the conveyance direction A), the conveyance speed V of the article P, the length Lc1 of the second conveyor 14 in the conveyance direction A, the length Lc2 of the second conveyor 14 in the direction orthogonal to the conveyance direction A, the diameter of the drive roller 144a and the follower roller 144b, the number of teeth that the drive roller 144a has, the number of teeth that the motor used as the second drive unit 18b has, and the total length of the second conveyor belt 14a. To summarize, the frequency of the noise included in the weigh signal of the load cell 28 varies depending on information specific to the weighing apparatus 100, the speed V at which the article P is conveyed by the weighing apparatus 100, and the properties of the article P.

In other words, if the information specific to the weighing apparatus 100, the properties of the article P (the prescribed weight Wt of the article P or the length L1 of the article P in the conveyance direction A), and the speed V at which the article P is conveyed by the weighing apparatus 100 are known, the frequency of the noise included in the weigh signal of the load cell 28 can be inferred excluding noise caused by vibration based on environmental conditions at the location where the weighing apparatus 100 is installed. Moreover, here, using the control device 80 in weighing apparatus 100 having different physical configurations is not envisioned, so the information specific to the weighing apparatus 100 does not change. Consequently, in the weighing apparatus 100, if the properties of the article P and the conveyance speed V of the article P are known, the frequency of the noise included in the weigh signal of the load cell 28 can be generally inferred. In other words, if the properties of the article P and the conveyance speed V of the article P are known, a filter setting suitable for the signal processing unit 188 to use for the filtering can be identified.

Therefore, the control unit 84 determines the filter setting for the signal processing unit 188 to use for the filtering as follows.

First, it is assumed that the storage unit 82 of the control device 80 stores information (hereinafter called first information) in which the properties of articles (the weights of the articles and the lengths of the articles in the conveyance direction A), the conveyance speeds of the articles, and filter settings suitable for these conditions are associated with each other. What is meant by a filter setting suitable for the properties of a given article and the conveyance speed of a given article is a filter setting suitable for reducing the noise in the weigh signal output by the load cell 28 when an article having those properties has been conveyed at that conveyance speed by the second conveyor 14. The first information is information that is acquired by experiments using a test equipment of the weighing apparatus 100, and/or simulations utilizing a computer, and/or performing theoretical calculations in advance and is stored beforehand in the storage unit 82.

When the acquisition unit 86 has acquired the prescribed weight Wt of the article P, the length L1 of the article P, and the conveyance speed V of the article P (or when any of the prescribed weight Wt of the article P, the length L1 of the article P, and the conveyance speed V of the article P has been updated), the control unit 84 references the first information stored in the storage unit 82 to identify the filter setting corresponding to the prescribed weight Wt of the article P, the length L1 of the article P, and the conveyance speed V of the article P that the acquisition unit 86 acquired. Then, the control unit 84 determines the filter setting it has identified as the filter for the signal processing unit 188 to use for the filtering. The signal processing unit 188 uses the filter setting determined by the control unit to filter the weigh signal of the load cell 28.

### (3) Characteristics

(3-1)
The weighing apparatus 100 includes the second conveyor 14 serving as an example of a conveyance unit, the load cell 28 serving as an example of a detection unit, the acquisition unit 86, and the control unit 84. The second conveyor 14 receives and conveys the article P. The load cell 28 detects the weight of the second conveyor 14 or, in a case where the second conveyor 14 is conveying the article P, the weight of the second conveyor 14 and the weight of the article P on the second conveyor 14 and outputs the weigh signal. The acquisition unit 86 acquires the prescribed weight Wt of the article P conveyed by the second conveyor 14 or the speed V at which the article P is conveyed by the second conveyor 14, and the length L1 of the article P in the direction A in which it is conveyed by the second conveyor 14. The control unit 84 determines, based on the prescribed weight Wt of the article P or the conveyance speed V of the article P and the length of the article P that the acquisition unit 86 has acquired, a filter setting to use to filter the weigh signal detected by the load cell 28.

In particular, in this embodiment, the acquisition unit 86 acquires the prescribed weight Wt of the article P conveyed by the second conveyor 14, the speed V at which the article P is conveyed by the second conveyor 14, and the length L1 of the article P in the direction A in which it is conveyed by the second conveyor 14 (i.e., three parameters). The control unit 84 determines, based on the prescribed weight Wt of the article P, the length of the article P, and the length L1 of the article P in the direction A that the acquisition unit 86 has acquired, the filter setting to use to filter the weigh signal detected by the load cell 28.

Because the weighing apparatus 100 determines the filter setting to use to filter the weigh signal based on the prescribed weight Wt of the article or the conveyance speed V of the article P and the length L1 of the article P in the conveyance direction A that it has acquired, it is possible to determine an appropriate filter setting with which a high weighing accuracy can be realized even if one is not a knowledgeable and experienced technician.

(3-2)
The weighing apparatus 100 includes the storage unit 82. The storage unit 82 stores information in which the prescribed weight of the article P or the conveyance speed V of the article P, the length of the article P, and the filter setting are associated with each other. In particular, in this embodiment, the storage unit 82 stores information in which the prescribed weight of the article P, the conveyance speed V of the article P, the length L1 of the article P in the conveyance direction A, and the filter setting are associated with each other. The control unit 84 determines the filter setting based also on the information stored in the storage unit 82.

In the weighing apparatus 100, the prescribed weight of the article P or the conveyance speed V of the article P, the length L1 of the article P in the conveyance direction A, and the appropriate filter setting are associated with each other and stored in the storage unit 82, so it is possible to determine the appropriate filter setting even without conducting an actual operation of the weighing apparatus 100.

### (4) Example Modifications

Example modifications of the embodiment will be described below. It will be noted that the example modifications described below may be combined as appropriate where they are not mutually contradictory.

### (4-1) Example Modification A

In the above embodiment, the acquisition unit 86 acquires the prescribed weight Wt of the article P, the length L1 of the article P in the conveyance direction A of the conveyance device 10, and the speed V at which the article P is conveyed by the conveyance device 10.

However, the acquisition unit 86 need not acquire all of these. For example, in a case where the conveyance speed of the conveyance device 10 is not variable, the acquisition unit 86 need not acquire the conveyance speed of the conveyance device 10.

Furthermore, for example, in a case where the articles the weighing apparatus 100 handles are the same, the acquisition unit 86 need not acquire the prescribed weight of the article P.

### (4-2) Example Modification B

In the above embodiment, using the control device 80 in weighing apparatus having different physical configurations is not envisioned, but the control device 80 is not limited to this. The control device 80 may also be used in weighing apparatus having different physical configurations (having different specifications).

It will be noted that the frequency of the noise included in the weigh signal of the load cell 28, as mentioned above, varies depending on the information specific to the weighing apparatus 100, the properties of the article P, and the conveyance speed V of the article P. For that reason, in a case where the control device 80 is also used in weighing apparatus having different physical configurations, it is preferred that the control unit 84 also be provided with the information specific to the weighing apparatus 100 in order to determine the filter setting for the signal processing unit 188 to use.

Therefore, in a case where the control device 80 is used in weighing apparatus having different physical configurations, it is preferred that the acquisition unit 86 further acquire information relating to vibrational characteristics of a constituent part/constituent parts of the weighing apparatus.

Although this is not intended to limit the content of the information, for example, the information relating to the vibrational characteristics of the constituent part/constituent parts of the weighing apparatus 100 includes information about the length Lc1 of the second conveyor 14 in the conveyance direction A, information about the length Lc2 of the second conveyor 14 in the direction orthogonal to the conveyance direction A, information about the rigidity of members used in the weighing apparatus 100, information about the diameter of the drive roller 144a and the follower roller 144b, information about the number of teeth that the drive roller 144a has, information about the number of teeth that the motor used as the second drive unit 18b has, and information about the total length of the second conveyor belt 14a. It will be noted that the acquisition unit 86 need not acquire all the items of information relating to the vibrational characteristics of the constituent part/constituent parts of the weighing apparatus 100 exemplified here. For example, in regard to an item that has a relatively small effect on the vibrational characteristics of the constituent part/constituent parts of the weighing apparatus 100, the acquisition unit 86 need not acquire information about that item.

Furthermore, the information relating to the vibrational characteristics of the constituent part/constituent parts of the weighing apparatus 100 may also be information representing the type of the weighing apparatus (e.g., the model number representing the type of weighing apparatus).

In a case where the acquisition unit 86 acquires the information relating to the vibrational characteristics of the constituent part/constituent parts of the weighing apparatus, it is preferred that the storage unit 82 store information (hereinafter called first information) in which the properties of articles (the weights of the articles or the lengths of the articles in the conveyance direction A), the conveyance speeds of the articles, the information relating to the vibrational characteristics of the constituent part/constituent parts of the weighing apparatus, and filter settings suitable for these conditions are associated with each other. What is meant by a filter setting suitable for the properties of a given article, the conveyance speed of a given article, and the vibrational characteristics of the constituent part/constituent parts of a given weighing apparatus is a filter setting suitable for reducing the noise in the weigh signal output by the load cell 28 when an article having those properties has been conveyed at that conveyance speed by the second conveyor 14 in the weighing apparatus corresponding to the information relating to the vibrational characteristics of its constituent part/constituent parts.

Then, when the acquisition unit 86 has acquired the prescribed weight Wt of the article P or the conveyance speed V of the article P, the length L1 of the article P, and the information relating to the vibrational characteristics of the constituent part/constituent parts of the weighing apparatus (or when any of these pieces of information has been updated), the control unit 84 references the first information stored in the storage unit 82 and identifies the filter setting corresponding to the prescribed weight Wt of the article P or the conveyance speed V of the article P, the length L1 of the article P, and the information relating to the vibrational characteristics of the constituent part/constituent parts of the weighing apparatus that the acquisition unit 86 has acquired. Then, the control unit 84 determines the filter setting it has identified as the filter for the signal processing unit 188 to use for the filtering. The signal processing unit 188 uses the filter setting determined by the control unit to filter the weigh signal of the load cell 28.

Furthermore, even if the control device 80 is not used in weighing apparatus having different physical configurations (having different specifications), the control device 80 may be configured as described in this example modification B. When the control device 80 is configured in this way, even if, for example, the specifications of some parts have been changed due to replacement of those parts, an appropriate filter setting corresponding thereto can be determined.

### (4-3) Example Modification C

The weighing apparatus 100 of the above embodiment has the conveyance device 10, the detection device 20, and the control device 80, but the weighing apparatus 100 may also be an apparatus having configurations other than these. For example, in the above embodiment, an example is described where a sorting device separate from the weighing apparatus 100 is disposed downstream of the weighing apparatus 100. However, the weighing apparatus 100 may also have a sorting mechanism that sorts the articles P based on the weighing results of the articles P.

### (4-4) Example Modification D

In the above embodiment, a FIR filter was described as an example of the filter, but the filter type is not limited to a FIR filter and may be another type of filter capable of filtering the weigh signal.

### (4-5) Example Modification E

In the above embodiment, the weighing apparatus 100 equipped with the load cell 28 that has a strain gauge as a detection unit (weight sensor) is described. However, the type of detection unit that the weighing apparatus has is not limited to a load cell using a strain gauge. For example, the load cell 28 may also be a hydraulic load cell or a pneumatic load cell. Furthermore, the detection unit may also be a weight sensor other than a load cell type, such as a tuning fork vibration type of weight sensor, an electromagnetic balance type of weight sensor, or a capacitive type of weight sensor.

It will noted that in a case where there is the potential for different types of detection units to be used, the frequency of the noise included in the weigh signal output by the detection unit may vary. Furthermore, in a case where the weighing capacity and/or the spring constant are different, the frequency of the noise included in the weigh signal output by the detection unit may vary, even when the detection unit is the same type (e.g., even when it is a load cell using a strain gauge).

Therefore, in a case where the type of the detection unit is different (here, a case where the type of the detection unit is different includes a case where the detection unit is the same type but has a different weighing capacity and/or spring constant), it is preferred that the acquisition unit 86 of the control device 80 acquire information relating to the type of the detection unit.

In a case where the acquisition unit 86 acquires the information relating to the type of the detection unit, it is preferred that the storage unit 82 store information (hereinafter called first information) in which the properties of articles (the weights of the articles or the lengths of the articles in the conveyance direction A), the information relating to the type of the detection unit, the conveyance speeds of the articles, and/or the information relating to the vibrational characteristics of the constituent parts of the weighing apparatus, and filter settings suitable for these conditions are associated with each other. What is meant by a filter setting suitable for conditions is a filter setting suitable for reducing noise in the weigh signal output by the detection unit when the article has been conveyed by the second conveyor 14 in those conditions.

Then, when the acquisition unit 86 has acquired the prescribed weight Wt of the article P or the conveyance speed V of the article P, the length L1 of the article P, the information relating to the type of the detection unit, and, as needed, the information relating to the vibrational characteristics of the constituent parts of the weighing apparatus (or when any of these pieces of information has been updated), the control unit 84 references the first information stored in the storage unit 82 and identifies the filter setting corresponding to the information that the acquisition unit 86 has acquired. Then, the control unit 84 determines the filter setting it has identified as the filter for the signal processing unit 188 to use for the filtering. The signal processing unit 188 uses the filter setting determined by the control unit to filter the weigh signal of the load cell 28.

### INDUSTRIAL APPLICABILITY

The present invention can be widely applied to weighing apparatus that weigh an article as it is being conveyed, and is useful.

### REFERENCE SIGNS LIST

- 14: Second Conveyor (Conveyance Unit)
- 28: Load Cell (Detection Unit)
- 82: Storage Unit
- 84: Control Unit
- 86: Acquisition Unit
- 100: Weighing Apparatus
- A: Conveyance Direction
- L1: Length of Article
- Lc1: Length of Conveyance Unit in Conveyance Direction
- Lc2: Length of Conveyance Unit in Direction Orthogonal to Conveyance Direction
- P: Article
- V: Conveyance Speed
- Wt: Prescribed Weight

### CITATION LIST

### PATENT LITERATURE

Patent Document 1: JP-A No. 2012-199692

## Claims

1. A weighing apparatus (100) comprising:
a conveyance unit (10) configured to receive and convey an article;
a detection unit (28) configured to detect a weight of the conveyance unit (10) or, in a case where the conveyance unit (10) is conveying the article, the weight of the conveyance unit (10) and a weight of the article on the conveyance unit (10) and output a weigh signal;
an acquisition unit (86) configured to acquire:
a prescribed weight of the article conveyed by the conveyance unit (10),
a speed at which the article is conveyed by the conveyance unit (10) and
a length of the article (L1) in a direction in which it is conveyed by the conveyance unit (10); and
a control unit (84) configured to determine, based on the prescribed weight of the article, the conveyance speed of the article (V) and the length of the article (L1) that the acquisition unit (86) has acquired, a filter setting to use to filter the weigh signal detected by the detection unit (28).

2. The weighing apparatus (100) according to claim 1, further comprising
a storage unit (82) configured to store information in which the prescribed weight of the article or the conveyance speed of the article (V), the length of the article (L1), and the filter setting are associated with each other;
wherein
the control unit (84) is configured to determine the filter setting further based on the information stored in the storage unit (82).

3. The weighing apparatus (100) according to claim 1 or 2, wherein
the acquisition unit (86) is further configured to acquire information relating to a vibrational characteristic of a constituent part of the weighing apparatus (100), and
the control unit (84) is configured to determine the filter setting further based on the information relating to the vibrational characteristic of the constituent part of the weighing apparatus (100) that the acquisition unit (86) has acquired.

4. The weighing apparatus (100) according to claim 3, wherein the information relating to the vibrational characteristic of the constituent part of the weighing apparatus (100) includes at least one of information about a length of the conveyance unit (Lc1) in the conveyance direction (A) and information about a length of the conveyance unit (Lc2) in a direction orthogonal to the conveyance direction (A).

## Patentansprüche

1. Wiegevorrichtung (100), die aufweist:
eine Fördereinheit (10), die konfiguriert ist, einen Artikel aufzunehmen und zu befördern;
eine Ermittlungseinheit (28), die konfiguriert ist, ein Gewicht der Fördereinheit (10) oder, in einem Fall, in dem die Fördereinheit (10) den Artikel befördert, das Gewicht der Fördereinheit (10) und ein Gewicht des Artikels auf der Fördereinheit (10) zu ermitteln und ein Wiegesignal auszugeben;
eine Erfassungseinheit (86), die konfiguriert ist, zu erfassen:
ein vorgeschriebenes Gewicht des Artikels, der von der Fördereinheit (10) gefördert wird,
eine Geschwindigkeit, mit der der Artikel von der Fördereinheit (10) gefördert wird, und
eine Länge des Artikels (L1) in einer Richtung, in der er von der
Fördereinheit (10) gefördert wird; und
eine Steuereinheit (84), die konfiguriert ist, basierend auf dem vorgeschriebenen Gewicht des Artikels, der Fördergeschwindigkeit des Artikels (V) und der Länge des Artikels (L1), die die Erfassungseinheit (86) erfasst hat, eine Filtereinstellung zu bestimmen, die zum Filtern des von der Ermittlungseinheit (28) erfassten Wiegesignals verwendet wird.

2. Wiegevorrichtung (100) nach Anspruch 1, die ferner aufweist:
eine Speichereinheit (82), die konfiguriert ist, Informationen zu speichern, in denen das vorgeschriebene Gewicht des Artikels oder die Fördergeschwindigkeit des Artikels (V), die Länge des Artikels (L1) und die Filtereinstellung miteinander verknüpft sind;
wobei
die Steuereinheit (84) konfiguriert ist, die Filtereinstellung basierend auf den in der Speichereinheit (82) gespeicherten Informationen zu bestimmen.

3. Wiegevorrichtung (100) nach Anspruch 1 oder 2, wobei
die Erfassungseinheit (86) ferner konfiguriert ist, Informationen bezüglich einer Schwingungscharakteristik eines Bestandteils der Wiegevorrichtung (100) zu erfassen, und
die Steuereinheit (84) konfiguriert ist, die Filtereinstellung ferner basierend auf den Informationen bezüglich der Schwingungscharakteristik des Bestandteils der Wiegevorrichtung (100) zu bestimmen, die die Erfassungseinheit (86) erfasst hat.

4. Wiegevorrichtung (100) nach Anspruch 3, wobei die Information bezüglich der Schwingungscharakteristik des Bestandteils der Wiegevorrichtung (100) Informationen über eine Länge der Fördereinheit (Lc1) in der Förderrichtung (A) und/oder Informationen über eine Länge der Fördereinheit (Lc2) in einer Richtung orthogonal zu der Förderrichtung (A) umfassen.

## Revendications

1. Appareil de pesée (100), comprenant :
une unité de transport (10) prévue pour recevoir et transporter un article ;
une unité de détection (28) prévue pour détecter le poids de l'unité de transport (10) ou, dans le cas où l'unité de transport (10) transporte l'article, le poids de l'unité de transport (10) et le poids de l'article sur l'unité de transport (10), et
émettre un signal de pesée ;
une unité d'acquisition (86) prévue pour acquérir :
un poids prescrit de l'article transporté par l'unité de transport (10),
une vitesse à laquelle l'article est transporté par l'unité de transport (10), et
une longueur de l'article (L1) dans une direction de transport par l'unité de
transport (10) ; et
une unité de commande (84) prévue pour déterminer, sur la base du poids prescrit de l'article, de la vitesse de transport de l'article (V) et de la longueur de l'article (L1) acquis par l'unité d'acquisition (86), un réglage de filtre à utiliser pour filtrer le signal de pesée détecté par l'unité de détection (28).

2. Appareil de pesée (100) selon la revendication 1, comprenant en outre
une unité de mémorisation (82) prévue pour stocker des informations où le poids prescrit de l'article ou la vitesse de transport de l'article (V), la longueur de l'article (L1) et le réglage du filtre sont associés ;
où
l'unité de commande (84) est prévue pour déterminer le réglage du filtre en outre sur la base des informations stockées dans l'unité de mémorisation (82).

3. Appareil de pesée (100) selon la revendication 1 ou la revendication 2, où l'unité d'acquisition (86) est en outre prévue pour acquérir des informations relatives à une caractéristique vibratoire d'une partie constitutive de l'appareil de pesée (100), et
l'unité de commande (84) est prévue pour déterminer le réglage du filtre en outre sur la base des informations relatives à la caractéristique vibratoire de la partie constitutive de l'appareil de pesée (100), acquises par l'unité d'acquisition (86).

4. Appareil de pesée (100) selon la revendication 3, où les informations relatives à la caractéristique vibratoire de la partie constitutive de l'appareil de pesée (100) comprennent des informations sur une longueur de l'unité de transport (Lc1) dans la direction de transport (A) et/ou des informations sur une longueur de l'unité de transport (Lc2) dans une direction orthogonale à la direction de transport (A).
